# EUROPEAN PATENT APPLICATION

(11) **EP 1 764 733 A1**
(43) Date of publication of application: **21.03.2007**
(21) Application number: 06018677.2
(22) Date of filing: 06.09.2006
(51) Int. Cl.: G06Q 30/00

(54) **Space providing system and information exhibition system**

(30) Priority: 06.09.2005 JP 2005258007; 11.11.2005 JP 2005328113
(71) Applicant: UCHIDA YOKO Co., Ltd., Tokyo 104-8282 (JP)
(72) Inventor: Tanaka, Kouichi, 9-15, Shiomi 2-chome Koto-fu Tokyo 135 (JP); Murayama, Hideyuki, 9-15, Shiomi 2-chome Koto-fu Tokyo 135 (JP); Haraoka, Chiharu, 9-15, Shiomi 2-chome Koto-fu Tokyo 135 (JP); Oota, Hiroshi, 9-15, Shiomi 2-chome Koto-fu Tokyo 135 (JP); Sakata, Yuko, 9-15, Shiomi 2-chome Koto-fu Tokyo 135 (JP); Terada, Naoki, 12-5, Mita 2-chome Minato-ku Tokyo 108 (JP); Kunishita, Takashi, 9-15, Shiomi 2-chome Koto-fu Tokyo 135 (JP); Tachikawa, Hideki, 9-15, Shiomi 2-chome Koto-fu Tokyo 135 (JP); Matsuda, Tetsuya, 9-15, Shiomi 2-chome Koto-fu Tokyo 135 (JP)
(74) Representative: HOFFMANN EITLE

(57) **Abstract**

An object is to provide a space providing system that can be flexibly adapted to a modification to the configuration of a space structure in accordance with the intended purpose of a conference or exhibition and to replacement or addition of an information apparatus. In a space structure constructed by joining one or more post members extending upwardly from the floor and one or more horizontal beams extending parallel to the floor, connection means that can be fixed at a desired position is provided, by which a service providing apparatus is connected to the space structure. In addition, a space management server that detects and manages a service provided by the service providing apparatus is provided.

## Description

### TECHNICAL FIELD

The present invention relates to a space providing system including a space structure and to an information exhibition system used in the space created by a space structure.

### BACKGROUND ART

Various technologies for constructing a space to facilitate utilization of the space by many people in, for example, an office or the like have been disclosed. For example, a technology of constructing a sturdy space structure constructed by joining poles and frame members without damaging a an office or the like has been disclosed (see Japanese Patent Application Laid-open No. 2003-138771). This technology teaches a minimum common space structure constructed by three poles and two frame members, where the frame members form an inner angle of 120 degrees.

To use information apparatuses in a space in an office or the like, it is important to arrange wiring of power supply lines and signal lines. In connection with this, a technology concerning a tapping apparatus for a power supply line or a signal line that eliminates use of a wiring duct and a tap from wiring has been disclosed (see, for example, Japanese Patent Application Laid-Open Nos. 10-271649 and 2004-140998). This technology teaches to construct a structure using posts and beams, provide a power supply cable and a signal cable in the interior of the posts and beams and provide a connector for allowing connection with an information apparatus at some position on a beam.

Furthermore, a technology of editing image information etc. used in a presentation has been disclosed (see, for example, Japanese Patent Application Laid-Open No. 5-347751).
[Patent document] JP 2003-138771 A
[Patent document] JP 10-271649 A
[Patent document] JP 2004-140998 A
[Patent document] JP 2004-293082 A
[Patent document] JP 05-347751 A

### DISCLOSURE OF THE INVENTION

When constructing in an office or an exhibition hall etc., a common space, such as a conference space or a exhibition space, in which an information apparatus is used, the space structure is designed normally taking into consideration the size and weight of the information apparatus etc. used therein. For example in the case of providing projectors as information apparatuses, the size, weight and number of them vary depending on the intended purpose of the space, and the shape of the space structure is designed in accordance with these conditions.

However, with rapid development of information apparatuses in recent years, new information apparatuses emerge one after another or existing information apparatuses are updated by addition of new functions or downsizing. On the other hand, upon changing the configuration of a space structure in accordance with, for example, the purpose of a conference, information apparatuses are sometimes replaced or added. Consequently, it is necessary to redesign the space structure in which such information apparatuses are used in accordance with changes in the size and shape of the information apparatuses, when, for example, a new information apparatus is used. However, conventional space structures have been designed based on specific information apparatuses as described above, and it is very difficult to redesign them.

Management, which ranges from turning on/off power to control, of the information apparatuses provided in the above mentioned space structure is normally performed by human for each information apparatus. In the case where all the information apparatuses are controlled by for example a management server to enhance convenience by eliminating human management, it is necessary upon replacement of an information apparatus to change setting of management server or reconstruct the management program. This makes replacement of the information apparatus more difficult.

In view of the above described problems, an object of the present invention is to provide a space providing system having a space structure and an information apparatus provided therein that can be flexibly adapted to a modification to the configuration of the space structure and replacement or addition of an information apparatus in accordance with the purpose of a conference or exhibition.

To achieve the above object, according to the present invention, connection means that can be fixed at a desired position in a space structure is provided, and in addition, a space management server that detects and manages a service provided by an information apparatus is provided. With such features, it is possible to realize a space providing system in which the configuration of the space structure can be changed in accordance with the purpose of a conference or exhibition and an information apparatus can be replaced or added in a flexible manner.

More specifically, according to the present invention there is provided a space providing system comprising a space structure constructed by connecting one or more post members extending upwardly against a floor and one or more horizontal beam members extending parallel to the floor to one another, the space structure being able to be adapted to a modification to a configuration of a conference space by changing the combination of said post members and said horizontal beam members, a service providing apparatus that provides a service controlled by a user terminal through a network, connection means for connecting said service providing apparatus at a desired position on said space structure, and a space management server that registers and manages the service provided by said service providing apparatus through the network and informs said user terminal of the service, said space management server being able to adapt itself to a modification to said service providing apparatus by registering and managing a service provided by the modified service providing apparatus and by informing said user terminal of this service.

In the above described system, when a modification is made to the configuration of said space structure, said space management server may adapt itself to the modification to the configuration of said space structure by registering and managing a service provided by said service providing apparatus that is modified upon said modification to the configuration of said space structure and by informing said user terminal of this service.

The above descried space structure is constructed by joining the post members and the horizontal beam members. The configuration of the space structure is designed appropriately in accordance with various factors such as the intended purpose of it and the required strength of it. The overall shape of the space structure is not limited to a rectangular shape but it may have various shapes such as a polygonal shape, a radial shape and a linear shape.

Thanks to the connection means, it is possible to adapt the system to changes in the size and shape of an information apparatus serving as the service providing apparatus upon replacement of it, as circumstances demand.

In addition, the space management server registers and manages the service provided by the service providing apparatus and informs the user terminal of the service through the network. More specifically, when the service providing apparatus is replaced or a new service providing apparatus is added, or when a modification is made to the service providing apparatus upon a modification of the configuration of the space structure, the space management server registers and manages the service automatically.

As per the above, according to the present invention, it is possible to reduce the need for conventional manual management, the need for making a change to setting of the management server and the need for reconstruction of the management program, and to provide a space providing system that can be flexibly adapted to a modification to the space structure and a modification to the information apparatus.

In the above described system, said service providing apparatus may include a projector that provides an image projection service and is connected to said space structure by said connection means and a screen on which an image projected by said projector is displayed. The connection means may be adapted to connect said projector at an appropriate position relative to said screen in accordance with the focal length of said projector when the focal length of the projector changes with a modification made to the projector, and said space management server may adapt itself to the modification made to the configuration of said projector by registering and managing said image projection service and by informing said user terminal of the image projection service.

As described above, the connection means can connect the service providing apparatus at a desired position on the space structure. Therefore, even when the focal length of the projector changes upon replacement of the projector with a different type of projector and it is necessary to change the distance between the projector and the screen, the distance can be changed flexibly thanks to the connection means.

In some cases, the service provided by the projector changes for example upon replacement of the projector with a different type of projector or the number of the projectors to be managed changes. In such cases also, the space management server registers and manages the new service. Accordingly, it is possible to reduce the need for conventional manual management, the need for making a change to setting of the management server and the need for reconstruction of the management program, and the system can be adapted flexibly.

The service providing apparatus may further include a screen photographing apparatus that is connected by said connection means to said space structure at a position at which it can photograph said screen and provides a screen photographing service, and said space management server may register and manage said screen photographing service and provide an interface for controlling said screen photographing service to said user terminal through the network.

The screen photographing service is a service of photographing an image projected on the screen and making the photographed image available as data at the user terminal. When the screen photographing, apparatus is connected at a position on said space structure at which it can photograph the screen and provides the screen photographing service, it is possible, for example, for a participant of a conference to capture an image projected on the screen and save it in the user terminal.

In addition, when the space management server provides an interface for controlling the screen photographing service, the participant can capture an image projected on the screen and save it in the user terminal using a web interface or the like only by establishing connection to the space management server without the need for capturing software for that purpose or complex operations such as an operation to log in to the screen photographing apparatus.

In the above described system, said service providing apparatus may be an illumination apparatus that is connected to said space structure by said connection means and provides an illumination control service, and said space management server may register and manage said illumination control service and provide an interface for controlling said illumination control service to said user terminal through the network.

Here, the illumination control service includes, for example, turning on/off of the illumination apparatus that provides the illumination control service, adjustment of its brightness and timer setting for turning it on/off. When the space management server provides an interface that allows operation of the illumination control service, a presenter and a participant can turn on/off the illumination apparatus or adjusting its brightness using a web interface or the like provided by the space management server without the need for manipulating the switches of all the illumination apparatuses provided.

In connection with this, automatic turning on/off control is made possible by on/off-timer setting made through the web interface or the like in accordance with the starting time and ending time of a conference etc. or representation time in an exhibition.

In the above described system, the space management server may be connected with an external space management server provided in an external space outside the space defined by said space structure through a network and inform said user terminal of a service managed by said external space management server.

Here, the external space management server is a server that is provided in an external space outside the space defined by the aforementioned space structure and manages a service(s). It is, for example, another space management server for a different space providing system provided at a remote place.

The space management server informs the user terminal of a service managed by the external space management server. Thus, a participant of a conference or the like can utilize the service under the management of the external space management server that manages another space only by connecting the user terminal to the space management server of the space in which he or she is present.

In the above described system, said post members and/or said horizontal beam members may have a groove portion for wiring provided along the axial direction in which a network connection line and/or a power supply line that said service apparatus has is to be accommodated.

By providing the above described groove portion for wiring, it is possible to prevent network connection lines and power supply lines that are necessary when providing various information apparatuses in the space structure from deteriorating the appearance of the space providing system. In addition, it is possible to prevent troubles such as entangling in the cables.

According to another aspect of the present invention, there is provided an information exhibition system comprising a main terminal apparatus, one or more sub terminal apparatuses and image display means existing in a predetermined space and a server apparatus, said main terminal apparatus, said sub terminal apparatuses and said image display means being connected via said server apparatus, said server apparatus having a function of displaying an image based on image information received from said main terminal apparatus on said image display means and a function of sending said image information received from said main terminal apparatus to said sub terminal apparatuses upon request from said sub terminal apparatuses.

Conventionally, all the images to be displayed on a display apparatus at a presentation or the like are prepared in advance as prints and distributed to participants when, for example, requested by the participants. Accordingly, significant time and efforts are spent in making preparation for a presentation or the like. According to the present invention, participants can capture and utilize a desired image by a simple operation of the sub terminal apparatuses.

Image photographing means may be connected to said information exhibition system, and said sever apparatus may have a function of receiving image information of an image photographed by said image photographing means and a function of sending said image information thus received to said sub terminal apparatuses upon request from said sub terminal apparatuses.

When the server apparatus has a function of receiving an image photographed by the image photographing means and a function of sending it to the sub terminal apparatus, participants can get an image presently displayed on a screen or the like on which comments have been written by the presenter rather than original image information used in the presentation, on a real-time basis.

In the above described information exhibition system, said server apparatus may have a function of causing said sub terminal apparatuses to display an image based on image information displayed by said image display means and image information of an image photographed by said image photographing means as images arranged side by side and a function of sending image information selected from among said displayed images to said sub terminal apparatuses.

When the server apparatus has the above described function, participants can view a list of the photographed images displayed side by side and select a specific image from them for display.

In the information exhibition system, said server apparatus may have means for accepting reservation of time at which it is used and may make preparation at least for activation of said image display means before said time.

When the server apparatus makes preparation for activation before the time at which it is used, the need for user's operation for activating the server apparatus before starting a conference or the like can be eliminated, and it is possible to start the conference without delay at the reserved time.

In the information exhibition system, said predetermined space may be a space created by a space structure constructed by connecting one or more post members extending upwardly against a floor and one or more horizontal beam members extending parallel to the floor to one another, and said space structure may be able to be adapted to a modification to a configuration of a conference space by changing the combination of said post members and said horizontal beam members.

According to the present invention, it is possible to provide a space providing system having a space structure and an information apparatus provided therein that can be flexibly adapted to a modification to the configuration of the space structure and replacement or addition of an information apparatus in accordance with the purpose of a conference or exhibition.

### BRIEF DESCRIPTION OF THE DRAWINGS

Fig. 1 is a diagram showing a configuration of an information exhibition system according to an embodiment.
Fig. 2 is a diagram showing a specific configuration of an information exhibition system according to an embodiment.
Fig. 3 is a flow chart of a process of reservation of holding of a presentation and a process of activation according to an embodiment.
Fig. 4 shows a screen displayed on the display of a sub terminal apparatus during the presentation according to an embodiment.
Fig. 5 is a flow chart of a process of capturing image information according to an embodiment.
Fig. 6 is a flow chart of another process of capturing image information according to an embodiment.
Fig. 7 is a flow chart of still another process of capturing image information according to an embodiment.
Fig. 8 is a flow chart of still another process of capturing image information according to an embodiment.
Fig. 9 is a flow chart of a process of printing an image based on image information that has been saved in a server apparatus by capturing according to an embodiment.
Fig. 10 is a flow chart of a process of searching image information that has been saved in a server apparatus by capturing according to an embodiment.
Fig. 11 is a diagram showing a specific process of displaying image information and file information according to an embodiment.
Fig. 12 is a diagram showing a specific configuration of the information exhibition system according to an embodiment.
Fig. 13 is a perspective view schematically showing a space structure according to an embodiment.
Fig. 14 shows an outer appearance of a pole that constitutes the space structure according to the embodiment.
Fig. 15 shows a projector connected to the space structure according to the embodiment in such a way as to be suspended from a beam.
Fig. 16 shows how a glass panel is attached to a pole in the space structure according to the embodiment.
Fig. 17 schematically shows the space structure shown in Fig. 13 but a modification has been made to its configuration upon replacement of a projector.
Fig. 18 is a flow chart of a process executed by a space management server.
Fig. 19 shows an interface for an illumination control service.
Fig. 20 is a flow chart of a process executed by the space management server in establishing connection with an external space management server and providing a user terminal with a service list.

### BEST MODE FOR CARRYING OUT THE INVENTION

Embodiments of a space providing system according to the present invention will be described with reference to the drawings.

### <First Embodiment>

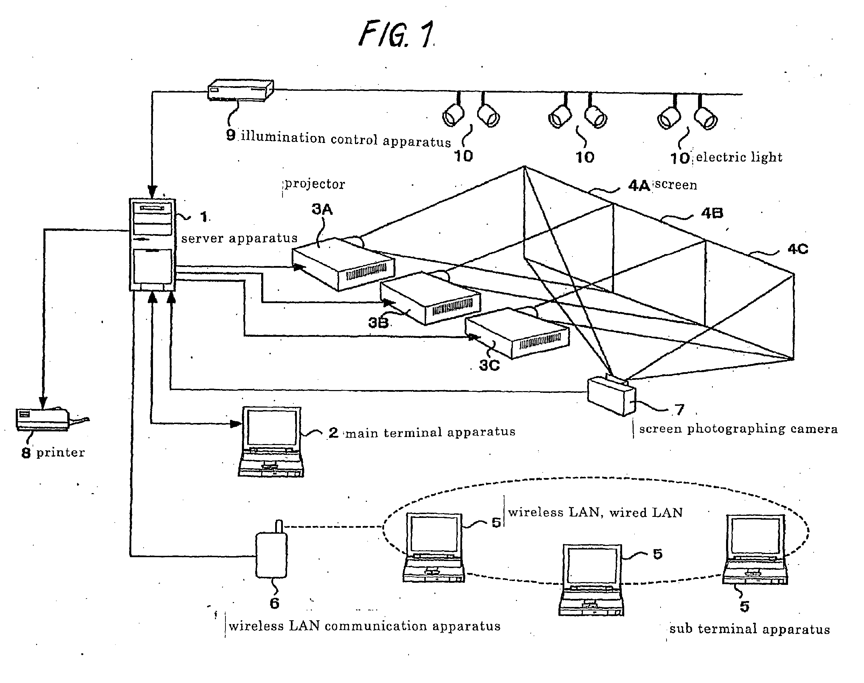

Fig. 1 illustrates an information exhibition system that is provided in a space structure to constitute a space providing system according to an embodiment. The system may be used for presentation.

A server apparatus 1 is connected through wire or wirelessly with a main terminal apparatus (PC) 2 to be operated by, for example, a presenter (not shown). In response to a presenter's operation of the main terminal apparatus 2, for example, image display during the presentation is performed. Image information is supplied from the server apparatus 1 to projectors 3A, 3B, 3C (which will be sometimes referred to collectively as the projector 3), and images are projected and displayed on three screens 4A, 4B, 4C (which will be sometimes referred to collectively as the screen 4) respectively.

There are one or more sub terminal apparatuses (PC) 5 to be operated by participants (not shown). The sub terminal apparatuses 5 are connected with the server apparatus 1 through, for example, a wireless LAN (Local Area Network) communication apparatus 6. A screen photographing camera 7 is provided to photograph writing on the screens 4A, 4B, 4C. The screen photographing camera 7 is also connected with the server apparatus 1. The server apparatus 1 is also connected with a printer 8 and an illumination control apparatus 9, which controls electric lights 10.

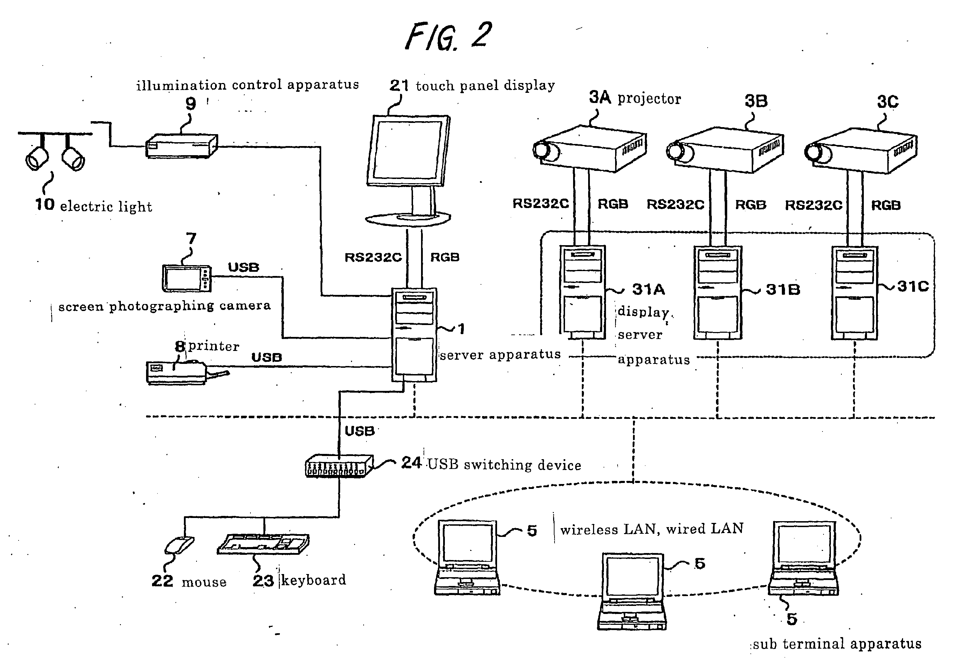

Fig. 2 illustrates a specific configuration of the system. Fig. 2 illustrates a case in which the server apparatus 1 serves also as the main terminal apparatus (PC) 2 for the presenter. Accordingly, to the server apparatus 1 is connected a touch panel display 21, a mouse 22 and a keyboard 23 etc. to be operated by the presenter via control lines such as RS-232C or USB (Universal Serial Bus). In this case, the mouse 22 and the keyboard 23 are connected through a USB switching device 24. An RGB line for supplying image information is also connected to the touch panel display 21.

Transmission lines from the server apparatus 1 through a wired or wireless LAN are connected to display server apparatuses 31A, 31B, 31C. Thus, control information and image information for driving and display is generated in the display server apparatuses 31A, 31B, 31C. These two types of information are supplied to the projectors 3A, 3B, 3C through the RS232-C control line and the RGB line for image information supply respectively.

The sub terminal apparatuses 5 are connected to the server apparatus 1 through the wired or wireless LAN. The server apparatus 1 is also connected with the screen photographing camera 7, the printer 8 and the illumination control apparatus 9, and connected with the electric lights 10 via the illumination control apparatus 9. Data such as control information and image information can be transmitted between the server apparatus 1 and the screen photographing camera 7, the printer 8 and the illumination control apparatus 9 through control lines using, for example, USB.

Using the above described apparatus, processing for e.g. a presentation is executed in the way described in the following.

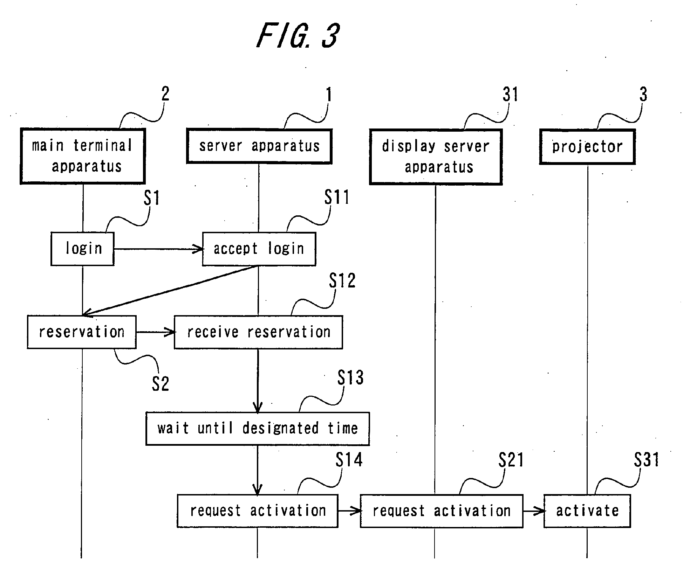

First, Fig. 3 illustrates a process of reservation of holding of presentation and activation. Here, the process is performed among the main terminal apparatus 2 operated by the presenter, the server apparatus 1, the display server apparatus 31 and the projector 3. In step S1 of the process executed in the main terminal apparatus 2, login to the server apparatus is started. When the login is accepted by the server apparatus 1 in step S11, reservation processing of designating the date and participants of the presentation etc. is executed in step S2 of the process in the main terminal apparatus 2. The server apparatus 1 receives the particulars of the reservation in step S12.

In step S13, the server apparatus 1 is in a standby state until the designated time, and when the designated time comes, it transmits an activation request to the display server apparatus 31 in step S14. When the display server apparatus 31 receives the request, it transmits an activation request to the projector 3 in step S21, whereby the projector 3 is activated in step S31. In the case where stabilization of display or other process takes a time, the projector 3 may be adapted to be activated before the time of holding of the presentation designated in the reservation. If the reservation of the meeting is to be changed, alteration of the particulars is received in step S12 of the process shown in Fig. 3, and the standby time in step S13 is automatically changed in accordance with the altered particulars thus received.

Reservation and activation of a presentation is performed in the above described way. In this embodiment, it is possible, while the presentation is held, to readily supply image information of an image displayed by projection by the projector 3 and image information of the writing on the screen 4 to the sub terminal apparatuses 5, using the above described system. In other words, in the above described system, it is possible to capture and make available an image displayed by projection by the projector 3 and an image photographed by the screen photographing camera 7 by a simple operation of the sub terminal apparatus 5.

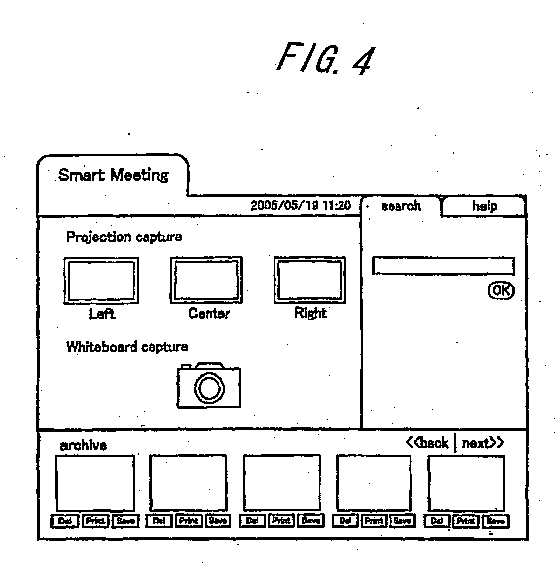

In this embodiment, for example the screen shown in Fig. 4 is displayed on the display of the sub terminal apparatus 5 while the presentation is held. In the upper left region of the screen, icons "Left", "Center" and "Right" indicating the positions of the projectors 3A, 3B and 3C are displayed under the caption "Projection capture". By, for example, moving the cursor (not shown) with the mouse to one of the icons and left-clicking, the image displayed by the corresponding projector 3A, 3B or 3C is captured.

In the left middle region of the screen shown in Fig. 4 is displayed an icon looking like a camera under the caption "Whiteboard Capture". By, for example, moving the cursor (not shown) with the mouse to this icon and left-clicking, an image taken by the screen photographing camera 7 is captured. Furthermore, in the lower region of the screen is displayed an archive of a series of images that have been captured previously under the caption "archive". In the upper right region of the screen, means ("search") for searching an image or other data stored in, for example, the server apparatus 1 is provided.

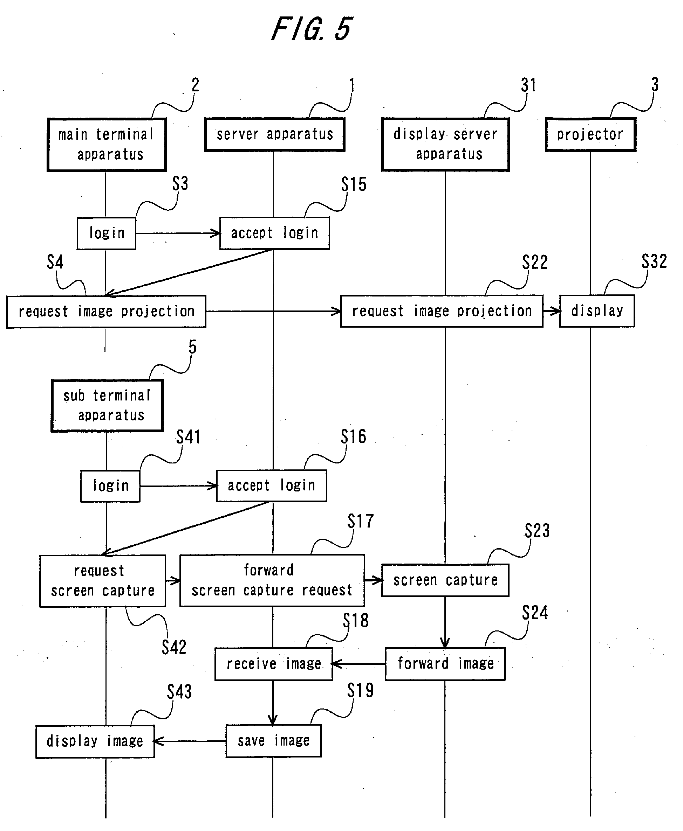

Processes of capturing an image displayed by the projector 3 upon a participant's operation of the sub terminal apparatus 5 using the above described operation screen is shown in Figs. 5 to 7. The processes shown in Figs. 5 to 7 are different from one another in the process in which the main terminal apparatus 2 operated by the presenter displays an image through the projector 3. The processes shown in Figs. 5 to 7 are performed among the main terminal apparatus 2 operated by the presenter, the server apparatus 1, the display server apparatus 31, the projector 3 and the sub terminal apparatus 5 operated by a participant.

First, Fig. 5 shows as a first embodiment of the process in which the main terminal apparatus 2 operated by the presenter displays an image through the projector 3, a process of displaying an image on the desktop of the main terminal apparatus 2 operated by the presenter directly through the projector 3 and a process of capturing the image displayed by the projector 3 in response to a participant's operation of the sub terminal apparatus 5.

After login to the server apparatus 1 is started by the main terminal apparatus 2 in step S3 and the login is accepted by the server apparatus 1 in step S15, a request for image projection is transmitted to the display server apparatus 31 by the main terminal apparatus in step S4. Upon receiving the request for image projection, the display server apparatus 31 transmits a request for image projection to the projector 3 in step S22. In response to the request, the projector 3 displays an image by projection in step S32.

On the other hand, after login to the server apparatus 1 is started by the sub terminal apparatus 5 in step S41 and the login is accepted by the server apparatus 1 in step B16, by, for example, designating the icon "projection capture" and left-clicking on the screen shown in Fig. 4, a request for screen capture is transmitted by the sub terminal apparatus 5 to the server apparatus 1 in step S42. Upon receiving the request for screen capture, the sever apparatus 1 forwards, in step S17, the request for screen capture to the display server apparatus 31. In response the request, the display server apparatus 31 captures the image displayed at that time in step S23.

The display server apparatus 31 forwards, in step S24, image information of the captured display screen to the server apparatus 1. The image information sent from the display server apparatus 31 is received by the server apparatus 1 in step S18, and the image information received is saved in step S19. Thus, the captured image information of the display screen is saved in the server apparatus 1, and images are sequentially displayed based on a series of image information saved in the server apparatus 1 by the sub terminal apparatus 5 in step S43, for example, in the "archive" region on the screen shown in Fig. 4.

The process of displaying an image on the main terminal apparatus 2 operated by the presenter directly through the projector 3 and the process of capturing the image displayed by the projector 3 in response to a participant's operation of the sub terminal apparatus 5 are performed in the above described way.

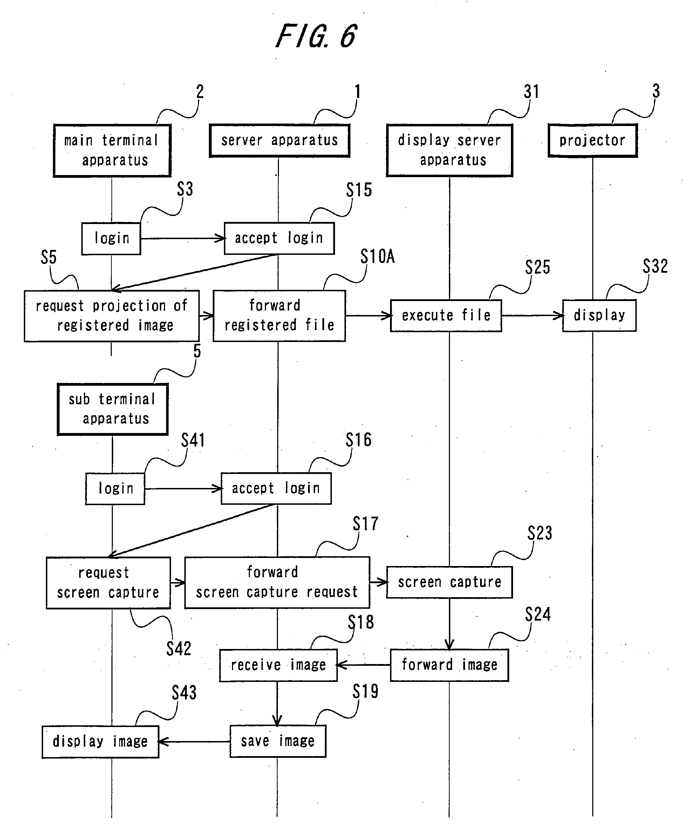

Fig. 6 shows, as a second embodiment of the process in which the main terminal apparatus 2 operated by the presenter displays an image through the projector 3, a process of displaying an image based on image information that has been stored previously through the projector 3 upon a presenter's operation of the main terminal apparatus 2 and a process of capturing the image displayed by the projector 3 in response to a participant's operation of the sub terminal apparatus 5. In Fig. 6, the process steps that are the same as those in Fig. 5 are designated by the same reference signs.

After login to the server apparatus 1 is started by the main terminal apparatus 2 in step S3 and the login is accepted by the server apparatus 1 in step S15, a request for projection of previously stored image information is transmitted to the server apparatus 1 by the main terminal apparatus 2 in step S5. In response to the request, the server apparatus 1 starts to send the stored file in step S10A. The display server apparatus 31 receives the file and executes it in step S25, whereby an image is displayed based on the image information of the file by projection by the projector 3 in step S32.

The process of displaying an image based on previously stored image information through the projector 3 upon presenter's operation of the main terminal apparatus 2 is performed in the above described way. In connection with this, the process of capturing the image displayed by the projector 3 in response to a participant's operation of the sub terminal apparatus 5 is the same as the process shown in Fig. 5, and a description thereof will be omitted.

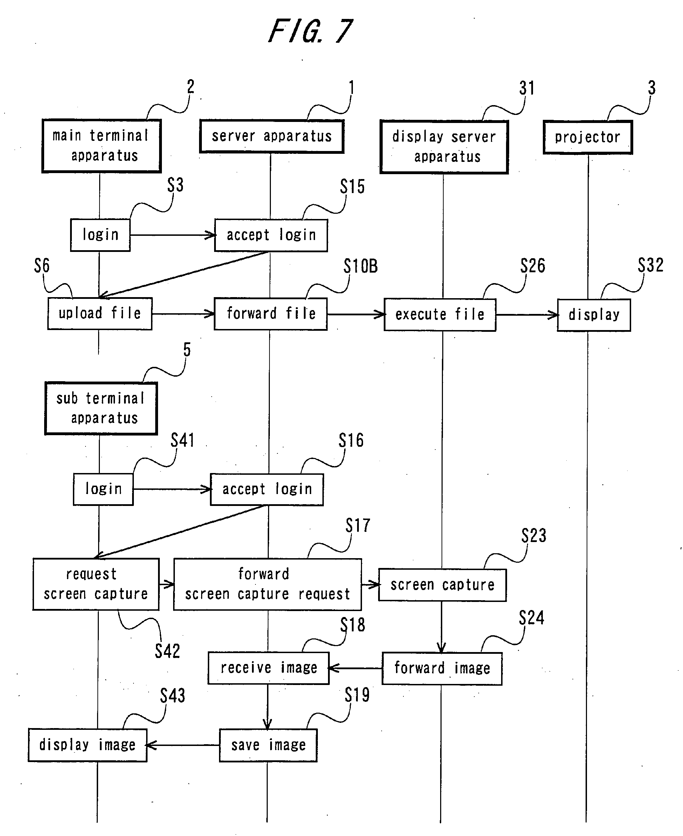

Fig. 7 shows, as a third embodiment of the process in which the main terminal apparatus 2 operated by the presenter displays an image through the projector 3, a process of displaying an image through the projector 3 by uploading a file of an image from the main terminal apparatus 2 operated by the presenter and a process of capturing the image displayed by the projector 3 in response to a participant's operation of the sub terminal apparatus 5. In Fig. 7, the process steps that are the same as those in Fig. 5 are designated by the same reference signs.

After login to the server apparatus 1 is started by the main terminal apparatus 2 in step S3 and the login is accepted by the server apparatus 1 in step S15, a file for presentation is uploaded to the server apparatus 1 by the main terminal apparatus 2 in step S6. Then, the server apparatus 1 starts, in step S10B, to forward the uploaded file. The display server apparatus 31 receives the file and executes it in step S26, whereby an image is displayed based on the image file by projection by the projector 3 in step S32.

The process of displaying an image based on a file uploaded from the main terminal 2 operated by the presenter through the projector 3 is performed in the above described way. In connection with this, the process of capturing the image displayed by the projector 3 in response to a participant's operation of the sub terminal apparatus 5 is the same as the process shown in Fig. 5, and a description thereof will be omitted.

According to the above described processes shown in Figs. 5 to 7, an image is displayed by the main terminal apparatus 2 operated by the presenter through the projector 3, and in addition, it is possible for a participant to capture the image displayed by the projector 3 by operating the sub terminal apparatus 5, more specifically, for example, by designating the icon "projection capture" and left-clicking on the screen shown in Fig. 4.

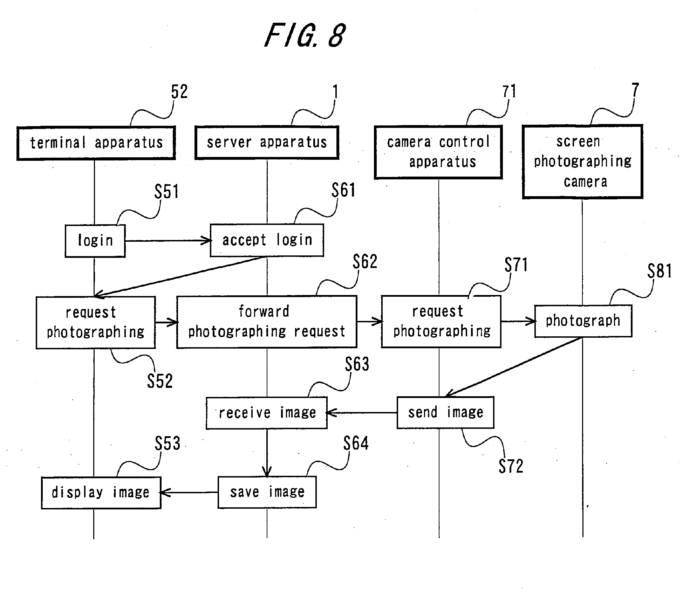

Fig. 8 shows the process of capturing an image taken by the screen photographing camera 7 using the operation screen shown in Fig. 4. The process can be executed in the main terminal apparatus 2 for the presenter and any sub terminal apparatus 5 for the participant, and in the following description, a reference will be made to a terminal apparatus 52 as a representative of these terminal apparatuses. Accordingly, the process shown in Fig. 8 is executed among the terminal apparatus 52, the server apparatus 1, a camera control apparatus 71 and the screen photographing camera 7. The camera control apparatus 71 may be a control unit built in the screen photographing camera 7.

After login to the server apparatus 1 is started by the terminal apparatus 52 in step S51 and the login is accepted by the server apparatus 1 in step S61, by, for example, designating the icon "whiteboard capture" and left-clicking on the screen shown in Fig. 4, a request for photographing is transmitted to the server apparatus 1 by the terminal apparatus 52 in step S52. Upon receiving the request for photographing, the sever apparatus 1 forwards, in step S62, the request to the camera control apparatus 71. In response to the request, the camera control apparatus 71 requests, in step S71, the screen photographing camera 7 to photograph, whereby the screen photographing camera 7 photographs in step S81.

The camera control apparatus 71 sends, in step S72, image information of the image photographed by the screen photographing camera 7 to the server apparatus 1. The image information sent from the camera control apparatus 71 is received by the server apparatus 1 in step S63, and the image information received is saved (or captured) in step S64. Thus, the image information of the image photographed by the screen photographing camera 7 is saved in the server apparatus 1, and images are sequentially displayed based on a series of image information saved in the server apparatus 1 by the terminal apparatus 52 in step S53, for example, in the "archive" region on the screen shown in Fig. 4.

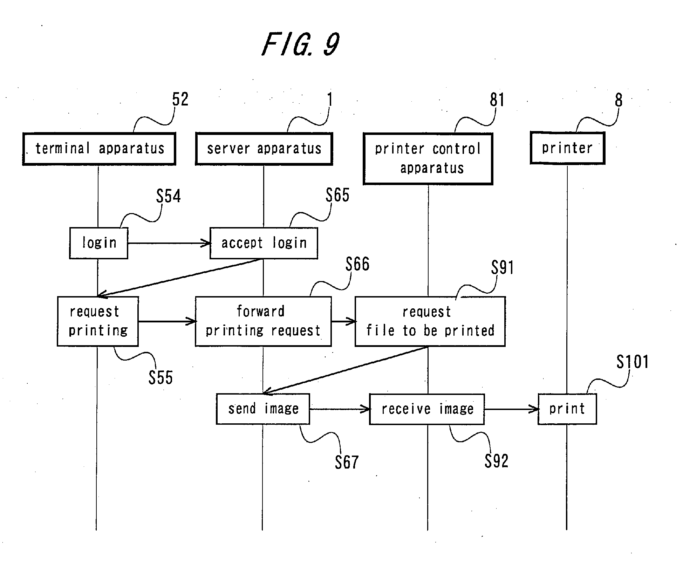

Fig. 9 shows a process of printing an image based on the image information saved in the server apparatus 1 by the above described capture process using the operation screen shown in the above mentioned Fig. 4. This process can be executed in any of the main terminal apparatus 2 for the presenter and the sub terminal apparatuses 5 for the participants, and in the following description, a reference will be made to a terminal apparatus 52 as a representative of these terminal apparatuses. Accordingly, the process shown in Fig. 9 is executed among the terminal apparatus 52, the server apparatus 1, a printer control apparatus 81 and a printer 8. The printer control apparatus 81 may be a control unit built in the printer 8.

After login to the server apparatus 1 is started by the terminal apparatus 52 in step S54 and the login is accepted by the server apparatus 1 in step S65, by, for example, left-clicking on the "Print" icon annexed to an image in the "archive" region in the screen shown in Fig. 4, a request for printing is transmitted to the server apparatus 1 by the terminal apparatus 52 in step S55. Upon receiving the request for printing, the sever apparatus 1 forwards, in step S66, the request to the printer control apparatus 81. At that time, the server apparatus 1 may forward, together with the request for printing, information identifying the terminal apparatus 52 that has made the request for printing, such as the terminal number or the computer name assigned to the terminal apparatus 52, to the printer control apparatus 81. The information identifying the terminal apparatus 52 may be printed together with the image.

In step S91, the printer control apparatus 81 transmits a request for sending a file to be printed to the server apparatus 1. In response to the request, the sever apparatus 1 sends, in step S67, image information to the printer control apparatus 81. The printer control apparatus 81 receives, in step S92, the image information sent from the server apparatus 1. An image is printed by the printer 8 based on the image information in step S101.

In this way, the image information saved in the server apparatus 1 by the above described capturing process and displayed in the "archive" region in the screen shown in Fig. 4 can be made available from the printer 8 by printing only by clicking on the icon "Print" annexed to the image. In connection with this, it is possible to delete the image information with the "Del" icon or save the image information in the terminal apparatus 52 with the "Save" icon by following a procedure similar to printing.

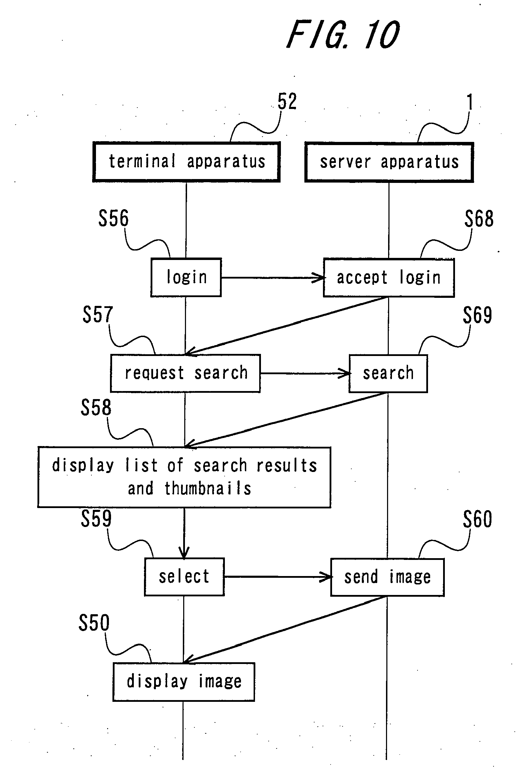

Fig. 10 shows a process of searching an image saved in the server apparatus 1 through the above described capturing process. This process can be executed in any of the main terminal apparatus 2 for the presenter and the sub terminal apparatuses 5 for the participants, and in the following description, a reference will be made to a terminal apparatus 52 as a representative of these terminal apparatuses. Accordingly, the process shown in Fig. 10 is executed among the terminal apparatus 52 and the server apparatus 1.

After login to the server apparatus 1 is started by the terminal apparatus 52 in step S56 and the login is accepted by the server apparatus 1 in step S68, by, for example, filling in the blank in the "search" region with a search condition and left-clicking on the "OK" icon on the screen shown in Fig. 4, a search request is sent to the server apparatus 1 in step S57. The search request is received by the server apparatus 1, and a search is conducted in step S69. The search results are sent to the terminal apparatus 52.

In step S58 of the process of the terminal apparatus 52, a list of the search results and thumbnails are displayed. Then, a selection is performed in step S59, and a request based on the selection is transmitted to the server apparatus 1. The server apparatus 1 sends, in step S60, the selected image information, and an image is displayed by the terminal apparatus 52 in step S50 based on the image information. In this way, it is possible to search image information saved in the server apparatus 1 by the above described capturing process.

As per the above, according to the information exhibition system, the server apparatus thereof and the information exhibition processing program according to this embodiment, there is provided a function of transmitting image information received from the main terminal apparatus operated by the presenter to a sub terminal apparatus upon request from the terminal apparatus operated by a participant. Thus, the participant can capture and use a desired image by a simple operation of the sub terminal apparatus. In addition, output of the image information by printing, deletion of the saved image information and retrieval of the image information can be performed by simple operations at the terminal apparatus.

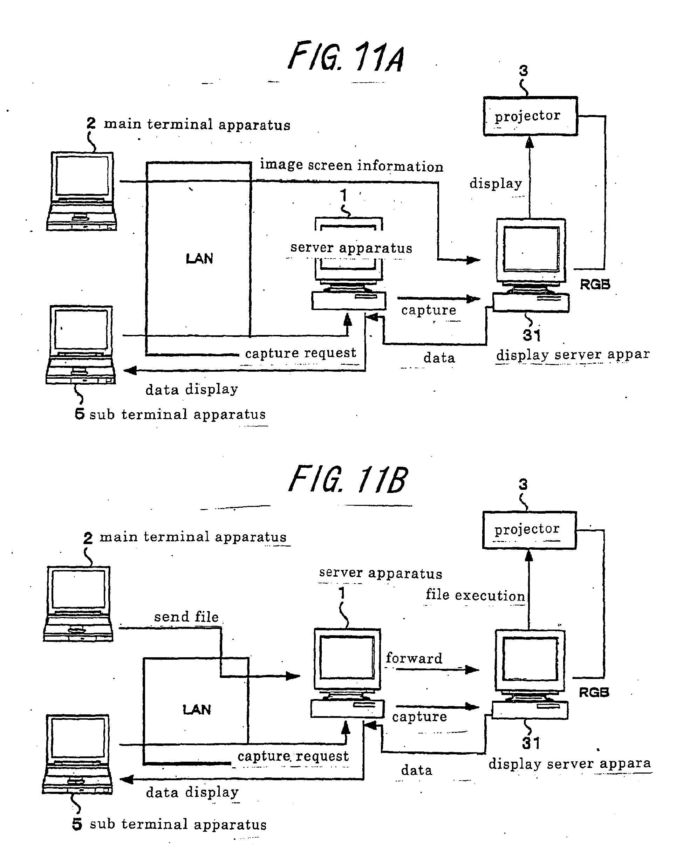

Fig. 11 shows flows of data at the time when image information from the main terminal apparatus 2 operated by the presenter is displayed through the projector 3. The upper diagram A in Fig. 11 is directed to the case where an image of the desktop of the main terminal apparatus 2 is directly displayed through the projector 3, and the lower diagram B in Fig. 11 is directed to the case where the file transmitted from the main terminal apparatus 2 is forwarded for display through the projector 3.

In the case shown in the upper diagram A in Fig. 11, image information from the main terminal apparatus 2 is forwarded to the display server apparatus 31 through the LAN, and the projector 3 is commanded to display. The image information is supplied to the projector 3 through the RGB line. On the other hand, a request for capture issued from the sub terminal apparatus 5 is forwarded to the display server apparatus 31 via the server apparatus 1. In response to this, the image displayed at that time is captured and the data of the image is sent to the sub terminal apparatus 5 via the server apparatus 1.

In the case shown in the lower diagram B in Fig. 11, a file is transmitted from the main terminal apparatus 2 to the server apparatus 1 through the LAN, and the file is forwarded to the display server apparatus 31, in which the file is executed for the projector 3. The image information is supplied to the projector 3 through the RGB line. On the other hand, a request for capture issued from the sub terminal apparatus 5 is forwarded to the display server apparatus 31 via the server apparatus 1. In response to this, the image displayed at that time is captured and the data of the image is sent to the sub terminal apparatus 5 via the server apparatus 1.

As per the above, in the above described system, in both the case where an image of the desktop of the main terminal apparatus 2 is directly displayed through the projector 3 and the case where a file from the main terminal apparatus 2 is forwarded for display through the projector 3, an image is displayed through the projector 3 based on image information supplied from the main terminal apparatus 2, and the participant can capture a desired image by operating the sub terminal apparatus 5.

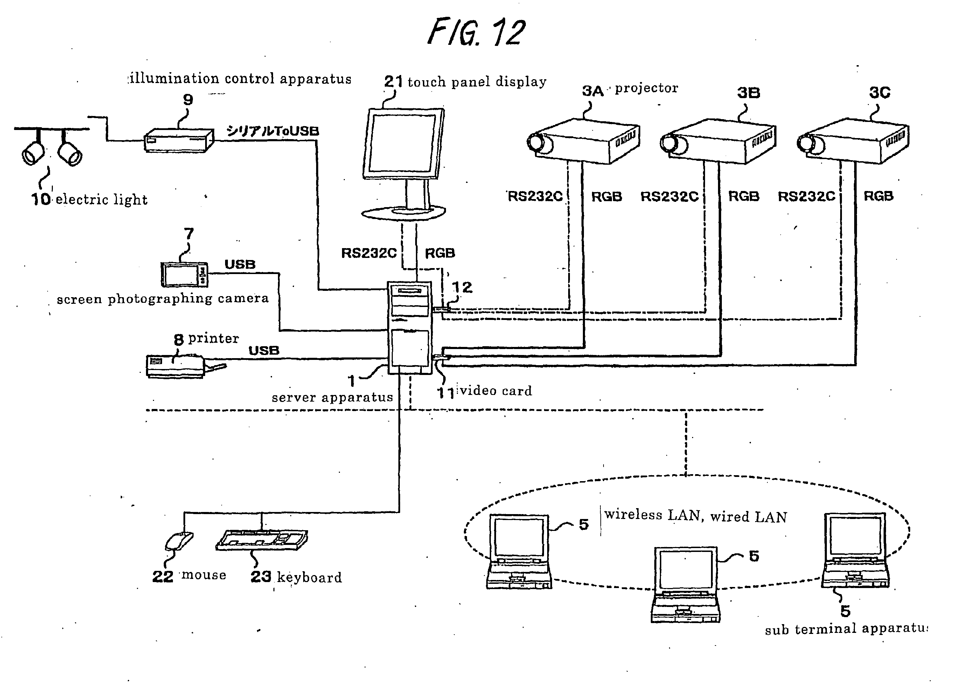

Fig. 12 shows a modification of the specific system shown in Fig. 2. In Fig. 12, the components same as those in Fig. 2 are designated by the same reference signs to omit redundant descriptions.

The server apparatus 1 is equipped with a video card 11 and an RS-232C expansion card 12. Image information is supplied from the video card 11 to the projectors 3A, 3B, 3C through the RGB lines, and control information is supplied from the RS-232C expansion card 12 to the projectors 3A, 3B, 3C through the RS-232C control lines. In addition, the control line for the touch panel display 21 may also be connected through the RS-232C expansion card 12. The configuration of the system other than those mentioned above is the same as the system shown in Fig. 2.

Therefore, with the above-described configuration also, according to the information exhibition system, the server apparatus thereof and the information exhibition processing program according to this embodiment, there is provided a function of transmitting image information received from the main terminal apparatus operated by the presenter to a sub terminal apparatus upon request from the sub terminal apparatus operated by a participant. Thus, the participant can capture and use a desired image by a simple operation of the sub terminal apparatus. In addition, output of the image information by printing, deletion of the saved image information and retrieval of the image information can be performed by simple operations of the terminal apparatus.

As per the above, according to the information exhibition system of this embodiment, a main terminal apparatus, one or more sub terminal apparatuses and image display means provided in a predetermined space are connected via a server apparatus, and the server apparatus has a function of displaying an image through the image display means based on image information received from the main terminal apparatus and a function of transmitting the image information received from the main terminal apparatus to a sub terminal apparatus upon request from the sub terminal apparatus. Thus, the participant can capture and use a desired image by a simple operation of the sub terminal apparatus.

Furthermore, the server apparatus of the information exhibition system of this embodiment is a server apparatus of an information exhibition system in which a main terminal apparatus, one or more sub terminal apparatuses and image display means provided in a predetermined space are connected and has a function of displaying an image through the image display means based on image information received from the main terminal apparatus and a function of transmitting the image information received from the main terminal apparatus to a sub terminal apparatus upon request from the sub terminal apparatus. Thus, the participant can capture and use a desired image by a simple operation of the sub terminal apparatus.

Still further, according to the information exhibition processing program of this embodiment, in an information exhibition processing program for use in a system in which a main terminal apparatus, one or more sub terminal apparatuses and image display means provided in a predetermined space are connected via a server apparatus, there is provided a function of displaying an image through the image display means based on image information received from the main terminal apparatus and a function of transmitting the image information received from the main terminal apparatus to a sub terminal apparatus upon request from the sub terminal apparatus. Thus, the participant can capture and use a desired image by a simple operation of the sub terminal apparatus.

The present invention is not limited to the above described embodiments, and various modification can be made thereto without departing from the scope of the invention as recited in the claims.

### <Second Embodiment>

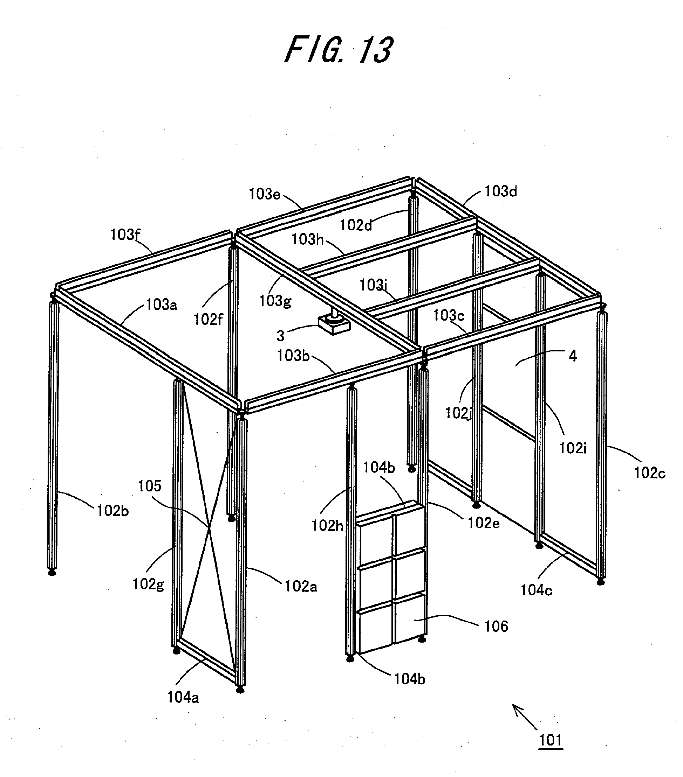

A space structure that constitutes the space providing system according to the present invention will be described with reference to drawings. Fig. 13 is a perspective view schematically showing the overall configuration of a space structure 101. The space structure 101 is mainly composed of poles 102a to 102j (which will be sometimes referred to collectively as the "pole 102" hereinafter) as the post members, beams 103a to 1031 (which will be sometimes referred to collectively as the "beam 103" hereinafter) as the horizontal beam members, short beams 104a to 104c (which will be sometimes referred to collectively as the "short beam 104" hereinafter). The poles 102 are standing vertically on the floor to support the space structure 101, and the beams 103 and the short beams 104 are extending parallel to the floor and connecting the poles 102 or the beams 103.

Specifically, the space structure 101 shown in Fig. 13 is a rectangular structure, and six poles 102a to 102f are provided at the four corners and near the center of the long sides of the rectangular structure respectively. The top portions of these poles 102a to 102f are linked by seven beams 103a to 103g. Furthermore, pole 102g is provided in such a way as to be opposed to pole 102a that is at the frontmost position in Fig. 13, and braces 105 are attached between pole 102a and pole 102g. This pole 102g is attached to beam 103a. The bottom portions of pole 102a and pole 102g are linked by a short beam 104a that is extending parallel to the floor. Short beam 104a, pole 102a, pole 102g, beams 103 and braces 105 are intended to enhance the strength of the space structure 101.

Pole 102h is provided in such a way as to be opposed to pole 102e. This pole 102h is attached to beam 103b. Two short beams 104b are attached between pole 102e and pole 102h, and a rack 106 is provided in a space defined by short beams 104b, poles 102e and 102h. Between pole 102c and pole 102d are provided two poles 102i and 102j, which are connected to beam 103d. The bottom portions of poles 102c, 102i, 102j and 102d are linked by short beams 104c. A screen 4 is provided between pole 102i and pole 102j. The screen 4 serves as a projection screen for a projector 3 that is suspended from beam 103g. In view of the load applied on beam 103g due to the weight of the projector 3, beams 103h and 103i are provided between beam 103g and beam 103d to add strength. The projector 3 is supplied with signals by a computer accommodated in the rack 106.

As per the above, the space structure 101 is a structure constructed by assembling poles, beams and short beams suitably in accordance with the intended purpose, and information apparatuses such as a computer and a projector 3 are set therein. Therefore, the space structure 101 is not limited to one shown in Fig. 13, but it may be designed suitably in accordance with various purposes.

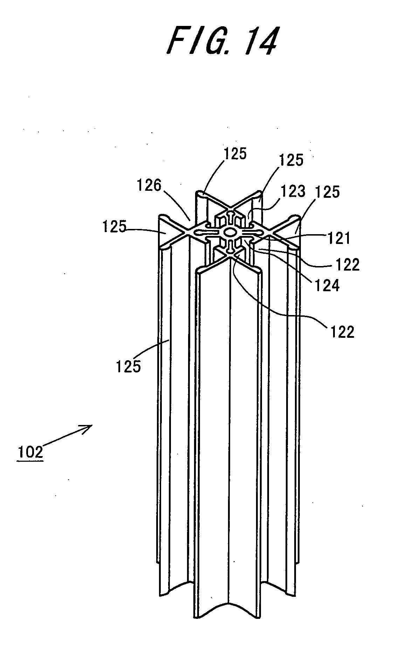

Fig. 14 shows the structure of the pole 102. The pole 102 has groove portions 124 extending along the axial direction. The groove portion 124 is the feature in which a slide connection apparatus that will be described later is set. The pole 102 has opposed walls 125 extending along the axial direction. The opposed walls 125 form groove portions for wiring 126, in which power supply cables and signal cables for the apparatuses used in the space providing system according to the embodiment can be accommodated. Since cables accommodated in the groove portions for wiring 126 might deteriorate the appearance, a cable cover (not shown) may be provided to cover the groove portions for wiring 126.

The beam 103 has groove portions 124, opposed walls 125 and groove portions for wiring 126 similar to those of the pole 102, and the short beam 104 has groove portions 124 similar to those of the pole 102 (though their details are not illustrated in the drawings).

The above mentioned slide connection apparatus is composed of a movable member, fixing member and a joint (illustration thereof will be omitted). The movable member is set in the groove portion 124 and movable along it, and the movable member is fixed at a desired position by the fixing member. The joint is screwed on the fixing member, and a service providing apparatus is mounted by the joint. In this way, it is possible to connect the service providing apparatus at a desired position on the space structure.

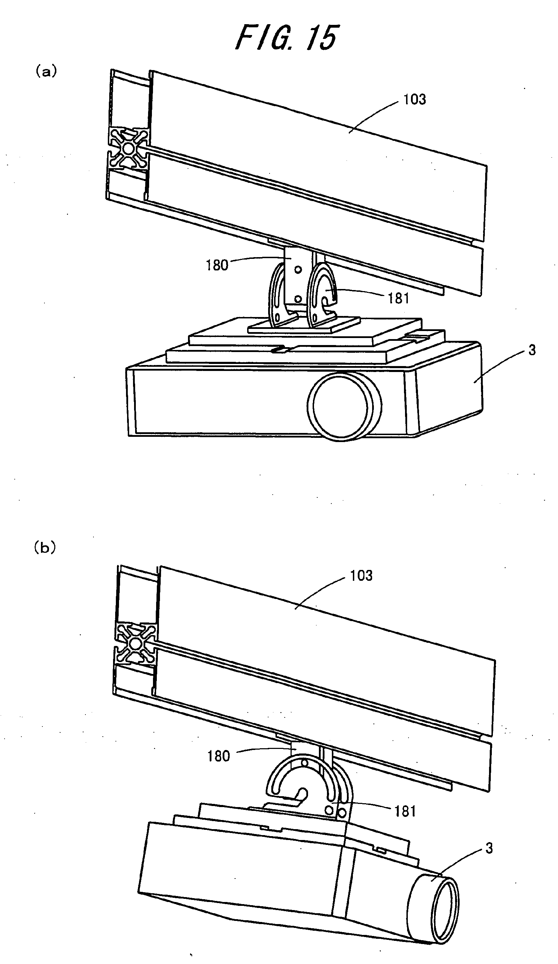

Next, how the projector 3 is mounted on the beam 103 in the space structure 101 will be described with reference to Fig. 15. As shown in Fig. 15, the projector 3 is mounted on the beam 103 by means of joints 180, 181. In connection with this, the aforementioned slide connection apparatus is set in the groove portion 34 on the bottom side of the beam 103. Thus, joint 180 and joint 181 are attached to screw holes of the slide connection apparatus that is in the fixed sate in the groove portion 34, and the projector 3 is coupled to the joint 181. In this way, the projector 3 is connected on the beam 103 in a suspended manner.

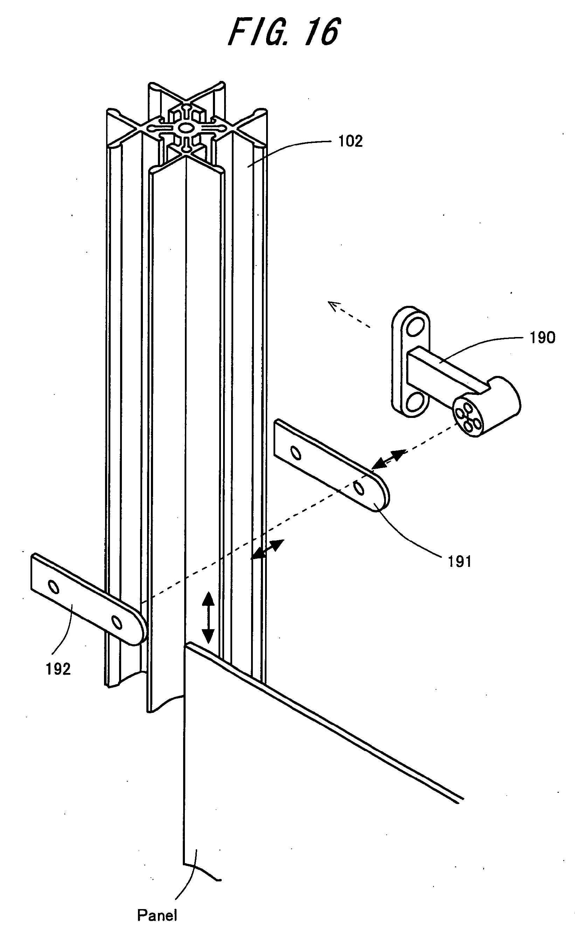

Furthermore, the screen 4 or a plate-like panel made of, for example, glass may be attached to a pole 102 or a beam 103 in a manner shown in Fig. 16. Specifically, one of pieces of fastening hardware 191, 192 that hold and fix the panel therebetween is fixed to the slide connection apparatus using a bracket 190 that can be fixed to screw holes of the slide connection apparatus that is in the fixed state in the groove portion 124 of the pole 102 or the beam 103. In this way, the panel can be attached to the pole 102 or the beam 103 at a desired position.

In the space structure having the above described configuration, it is possible to attach an additional pole 102 or an additional service providing apparatus to a beam 103 and to change the position of a pole or a service providing apparatus that has already been connected, by using the slide connection apparatus. Such an addition and modification can also be made to connection between a pole 102 and a short beam 104 or between two beams 103.

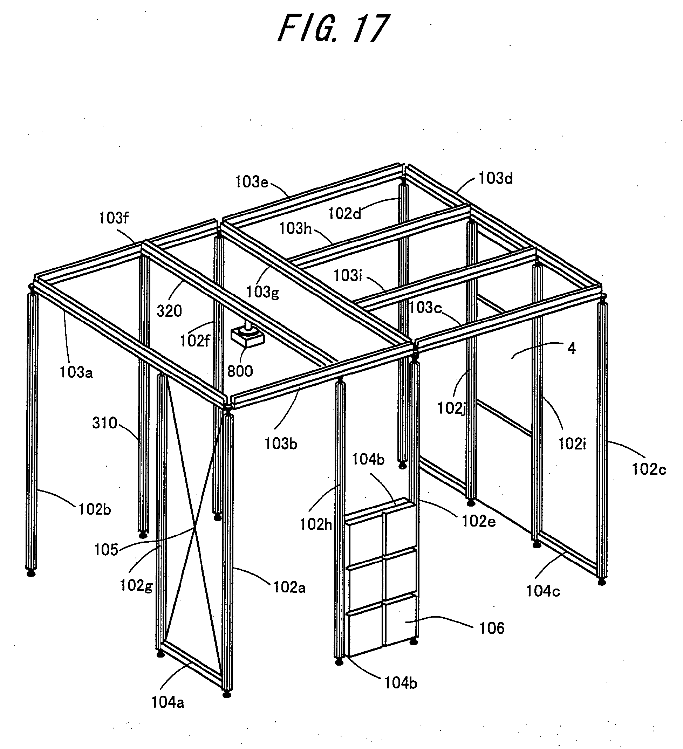

As a specific case, it is assumed that in the space structure 101 shown in Fig. 13, the projector 3 (an information apparatus) is replaced by a new projector 800 for update (see Fig. 17). The new projector 800 is heavier than the previous projector 3 and has a focal length longer than that of the previous projector 3. In this case, a new beam 300 is additionally provided in the space structure 101 in such a way as to bridge existing beams 103b and 103f utilizing joints. In addition, a pole 310 is additionally provided at a position for supporting the joining portion of beam 300 and beam 103f utilizing a slide connection apparatus to add strength. In this way, additions and changes of the position of the poles 102, the beams 103 and the short beams 104 that constitute the space structure 101 can be easily made upon replacing an information apparatus or other occasions.

The slide connection apparatus with which the projector 3 is connected can be moved along the groove portion 124 and can be fixed at a desired position as described above. Therefore, the position of the projector 3 may be adjusted by changing the position of the slide connection apparatus with which the projector 3 is connected to the beam 103 upon replacement of the projector 3.

A space providing system according to the second embodiment is constructed by providing the projector 3, the screen 4 and the server apparatus 1 etc. described in connection with the first embodiment in the above described space structure and building their network. (As to the apparatuses provided, see Figs. 1 and 2). The structure of the information apparatuses and the configuration of the network are the same as those described in the first embodiment, and descriptions thereof will be omitted.

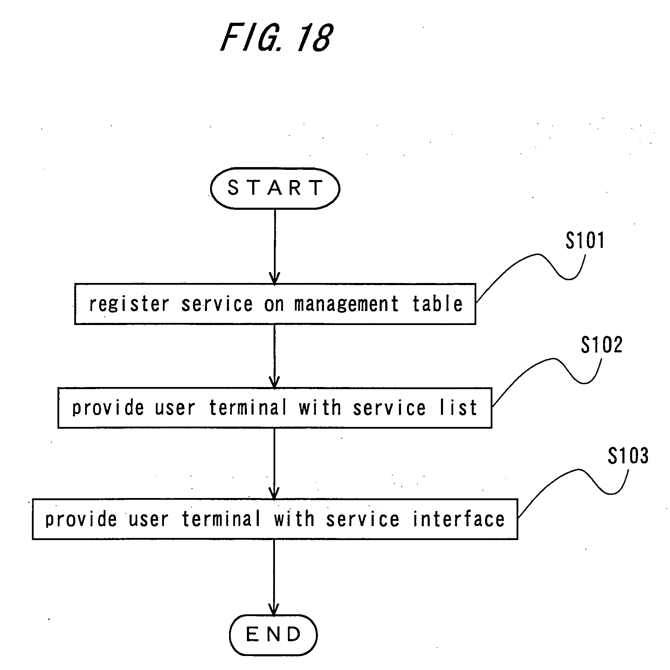

Next, a space management server will be described. The server apparatus 1 functions as the space management server according to the present invention. The space management server is a computer provided with a CPU, a RAM, a HDD and other components and functions as a space management server by interpreting and executing a program loaded into a RAM on the CPU. Fig. 18 is a flow chart of a process executed by the space management server. The process of this flow chart is executed by the space management server at regular intervals or upon request from a user terminal etc..

In step S101, services are registered on a management table in the space management server. The space management server accepts service registration requests from service providing apparatuses in the network connected to the LAN and registers them on the management table. Here, the service providing apparatuses include, for example, the projectors 3A, 3B, 3C, the screen photographing camera 7, the illumination control apparatus 10, and the services provided by these apparatuses include an image projection service, a screen photographing service and an illumination control service etc.. After step S101, the process proceeds to step S102.

In step S102, the space management server provides a list of services to a user terminal. When the space management server receives a request (by, for example, an HTTP connection) from the user terminal, the space management server extracts, in response to the request, services from the management table on which the services are registered in step S101 and provides (or sends) a list of the extracted services to the user terminal. The list of the services is sent as, for example, a web page. After that, the process proceeds to step S103.

In step S103, the space management server provides an interface for service to a user terminal. When the space management server receives a request designating a service from a user terminal, the space management server provides (or sends) a web interface for the designated service in response to the request. The web interface is a web page having buttons and entry forms for allowing control of the service. The screen display shown in Fig. 4 is an example of the web interface. Since the interface is a web page, the interface can be browsed by an internet browser, and accordingly control of the service can be made available without depending on the environment of the user terminal. After step S103, the process presented in this flow chart is terminated.

As per the above, since registration and management of services are performed by the space management server, and user terminals are informed of the available services by the space management server, it is not necessary to change setting of the management server or to reconstruct the management program even when the configuration of the space structure is changed in accordance with the intended purpose of the space structure such as conference or exhibition or when an information apparatus is replaced or added. Thus, it is possible to provide a space providing system that can be adapted flexibly to such changes.

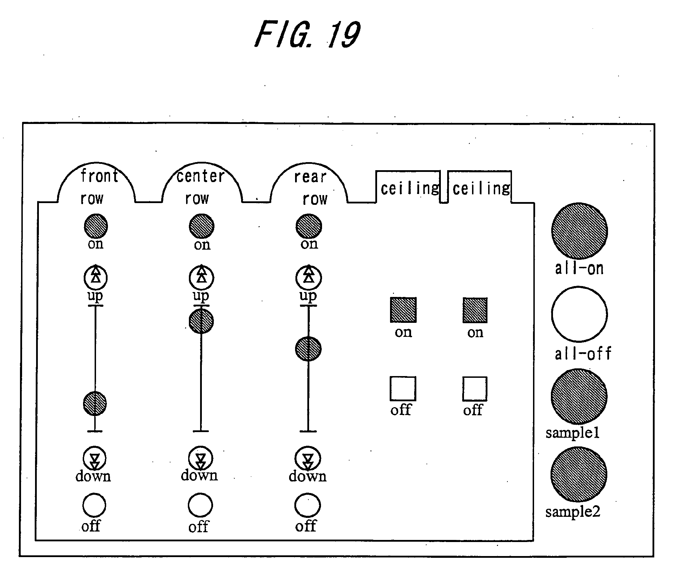

In Fig. 19, a web interface for an illumination control service is shown as an example of the web interface. On the screen are displayed "on" buttons and "off" buttons for turning on/off the electric lights in the front row, center row and rear row and on the ceiling respectively and sliders for controlling the brightness of the electric lights in each row. There is also displayed an "all-on" button and "all-off" button for turning on/of all the electric lights at one time, and a "sample" button for calling and executing a previously programmed illumination pattern. For example, the presenter can have the interface shown in Fig. 19 displayed on a user terminal by sending a request to the space management server through the user terminal and can use the illumination control service through this interface.

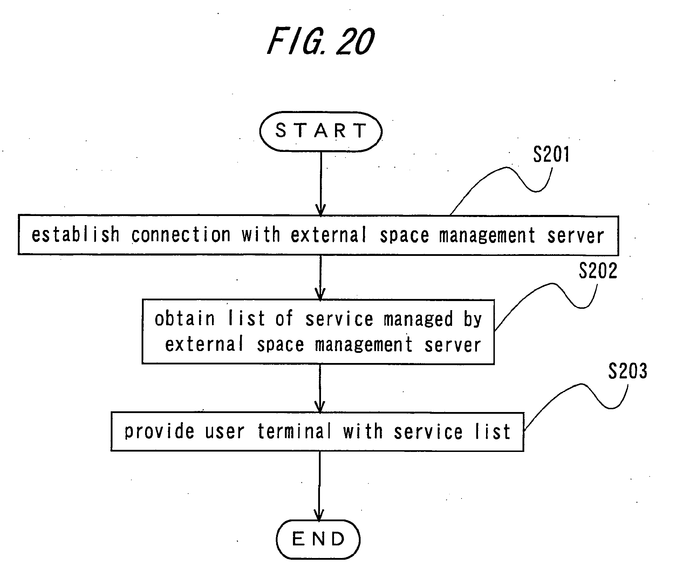

The space management server can be connected with an external space management server to make it possible to inform participants (or other persons who uses user terminals) of an external service(s). The external space management server is a server that is provided in the external space outside the space defined by the space structure and manages services. For example, it is a space management server of another space providing system provided at a remote place. Fig. 20 is a flow chart of a process in which the space management server establishes connection with an external space management server and provides a service list to a user terminal. The process of this flow chart is executed by the space management server at regular intervals or in response to a request from a user terminal.

In step S201, connection with an external space management server is established. The space management server is connected to the external space management server via an external network such as the Internet. After that, the process proceeds to step S202.

In step S202, a list of the services managed by the external space management server is obtained. The space management server sends a request for the service list to the external space management server to which connection was established in step S201 and obtains the service list from the external space management server. After that, the process proceeds to step S203.

In step S203, the space management server provides the service list to a user terminal. When the space management server receives a request (by, for example, an HTTP connection) from the user terminal, the space management server provides (or sends) the service list obtained in step S202 to the user terminal in response to the request. After that, the process of this flow chart is terminated.

By the above described features of this embodiment, the user can know and utilize a service managed by the external space management server without performing login to the external space management server or other troublesome operations.

## Claims

1. A space providing system comprising:
a space structure constructed by connecting one or more post members extending upwardly against a floor and one or more horizontal beam members extending parallel to the floor to one another, the space structure being able to be adapted to a modification to a configuration of a conference space by changing the combination of said post members and said horizontal beam members;
a service providing apparatus that provides a service controlled by a user terminal through a network;
connection means for connecting said service providing apparatus at a desired position on said space structure; and
a space management server that registers and manages the service provided by said service providing apparatus through the network and informs said user terminal of the service, said space management server being able to adapt itself to a modification to said service providing apparatus by registering and managing a service provided by the modified service providing apparatus and by informing said user terminal of this service.

2. A space providing system according to claim 1, wherein when a modification is made to the configuration of said space structure, said space management server adapts itself to the modification to the configuration of said space structure by registering and managing a service provided by said service providing apparatus that is modified upon said modification to the configuration of said space structure and by informing said user terminal of this service.

3. A space providing system according to claim 1 or 2, wherein said service providing apparatus comprises a projector that provides an image projection service and a screen on which an image projected by said projector is displayed, said projector being connected to said space structure by said connection means,
said connection means is adapted to connect said projector at an appropriate position relative to said screen in accordance with the focal length of said projector when the focal length of the projector changes with a modification made to the projector, and
said space management server adapts itself to the modification made to the configuration of said projector by registering and managing said image projection service and by informing said user terminal of the image projection service.

4. A space providing system according to claim 3, wherein said service providing apparatus further comprises a screen photographing apparatus that provides a screen photographing service, said screen photographing apparatus being connected, by said connection means, to said space structure at a position at which it can photograph said screen, and
said space management server registers and manages said screen photographing service and provides an interface for controlling said screen photographing service to said user terminal through the network.

5. A space providing system according to claim 1 or 2, wherein said service providing apparatus comprises an illumination apparatus that provides an illumination control service, the illumination apparatus being connected to said space structure by said connection means, and
said space management server registers and manages said illumination control service and provides an interface for controlling said illumination control service to said user terminal through the network.

6. A space providing system according to any one of claims 1 to 5, wherein said space management server is connected with an external space management server provided in an external space outside the space defined by said space structure through a network and informs said user terminal of a service managed by said external space management server.

7. A space providing system according to any one of claims 1 to 6, wherein said post members and/or said horizontal beam members have a groove portion for wiring provided along the axial direction in which a signal line and/or a power supply line that said service apparatus has is to be accommodated.

8. An information exhibition system comprising a main terminal apparatus, one or more sub terminal apparatuses and image display means existing in a predetermined space and a server apparatus, said main terminal apparatus, said sub terminal apparatuses and said image display means being connected via said server apparatus, said server apparatus having a function of displaying an image based on image information received from said main terminal apparatus on said image display means and a function of sending said image information received from said main terminal apparatus to said sub terminal apparatuses upon request from said sub terminal apparatuses.

9. An information exhibition system according to claim 8, wherein image photographing means is connected to said information exhibition system, and
said sever apparatus has a function of receiving image information of an image photographed by said image photographing means and a function of sending said image information thus received to said sub terminal apparatuses upon request from said sub terminal apparatuses.

10. An information exhibition system according,to claim 9, wherein said server apparatus has a function of causing said sub terminal apparatuses to display an image based on image information displayed by said image display means and image information of an image photographed by said image photographing means as images arranged side by side and a function of sending image information selected from among said displayed images to said sub terminal apparatuses.

11. An information exhibition system according to claim 8, wherein said server apparatus has means for accepting reservation of time at which it is used and makes preparation at least for activation of said image display means before said time.

12. An information exhibition system according to any one of claims 8 to 11, wherein said predetermined space is a space created by a space structure constructed by connecting one or more post members extending upwardly against a floor and one or more horizontal beam members extending parallel to the floor to one another, and said space structure is able to be adapted to a modification to a configuration of a conference space by changing the combination of said post members and said horizontal beam members.
